**Europäisches Patentamt**

**European Patent Office**

**Office européen des brevets**

(19)

(11) Veröffentlichungsnummer : **0 494 889 B1**

(12) # EUROPÄISCHE PATENTSCHRIFT

(45) Veröffentlichungstag der Patentschrift :
07.12.94 Patentblatt 94/49

(51) Int. Cl.⁵ : **G11B 7/085**

(21) Anmeldenummer : **90914164.0**

(22) Anmeldetag : **20.09.90**

(86) Internationale Anmeldenummer :
**PCT/EP90/01594**

(87) Internationale Veröffentlichungsnummer :
**WO 91/05338 18.04.91 Gazette 91/09**

(54) **RICHTUNGSLOGIK.**

(30) Priorität : **30.09.89 DE 3932832**

(43) Veröffentlichungstag der Anmeldung :
**22.07.92 Patentblatt 92/30**

(45) Bekanntmachung des Hinweises auf die
Patenterteilung :
**07.12.94 Patentblatt 94/49**

(84) Benannte Vertragsstaaten :
**AT BE CH DE DK ES FR GB IT LI LU NL SE**

(56) Entgegenhaltungen :
**EP-A- 301 644**
**Patent Abstracts of Japan vol.9, No. 127**
**(P-360)(1850) 31 May 1985, & JP-A-60 010429**
**(TOSHIBA K.K.) 19 January 1985,**

(73) Patentinhaber : **Deutsche Thomson-Brandt
GmbH
Postfach 1307
D-78003 Villingen-Schwenningen (DE)**

(72) Erfinder : **GLEIM, Günter
Oberer Sonnenbühl 22
D-7730 Villingen-Schwenningen 22 (DE)**
Erfinder : **FÜLDNER, Friedrich
Wilstorfstrasse 19
D-7730 Villingen-Schwenningen (DE)**
Erfinder : **REKLA, Bernd
Konstanzer Strasse 24
D-7730 Villingen-Schwenningen (DE)**

## Beschreibung

Die Erfindung betrifft ein Verfahren zur Feststellung, in welcher Richtung ein Abtaster Markierungen überstreicht oder Datenspuren auf einem Aufzeichnungsträger kreuzt, wobei ein erstes Fehlersignal und ein zum ersten Fehlersignal zweites Fehlersignal erzeugt wird, dessen Phase gegenüber der des ersten Fehlersignals in Abhängigkeit von der Bewegungsrichtung des Abtasters verschoben ist.

CD-Spieler, Videoplattenspieler, DRAW-Disc-Spieler oder magneto-optische Aufzeichnungs- und Wiedergabegeräte sind beispielsweise mit einem Spurregelkreis und einer optischen Abtastvorrichtung ausgestattet.

Aufbau und Funktion einer optischen Abtastvorrichtung, eines sogenannten optical pick-ups, sind in Electronic Components & Applications, Vol. 6, No. 4, 1984 auf Seite 209 - 215 beschrieben.

Der von einer Laserdiode ausgesendete Lichtstrahl wird mittels Linsen auf die CD-Platte fokussiert und von dort auf einen Photodetektor reflektiert. Aus dem Ausgangssignal des Photodetektors werden die auf der CD-Platte gespeicherten Daten und der Istwert für den Fokus- und für den Spurregelkreis gewonnen. In der genannten Literaturstelle wird die Abweichung des Istwerts vom Sollwert für den Fokusregelkreis als focusing error bezeichnet, während für die Abweichung des Istwerts vom Sollwert des Spurregelkreises der Ausdruck radial tracking error gewählt ist.

Als Stellglied für den Fokusregelkreis dient eine Spule, über deren Magnetfeld eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels des Spurregelkreises, der oft auch als Radialantrieb bezeichnet wird, ist die optische Abtastvorrichtung bezüglich der CD-Platte in radialer Richtung verschiebbar. Dadurch kann der Lichtstrahl auf den spiralförmigen Datenspuren der CD-Platte geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler und dem Photodetektor radial verschiebbar ist. Mit dem Feinantrieb ist der Lichtstrahl zusätzlich in radialer Richtung verschiebbar oder z.B. um einen vorgebbaren kleinen Winkel kippbar. Mittels des Feinantriebs kann daher der Lichtstrahl ein kleines Stück - etwa 1 mm - entlang einem Radius der CD-Platte gefahren werden.

Um eine einwandfreie Wiedergabe der Daten, seien es nun z.B. Bild und Ton bei einem Videoplattenspieler oder bloß der Ton bei einem CD-Spieler oder die Daten einer magneto-optischen Platte, zu erzielen, ist neben einer genauen Fokussierung des Lichtstrahls auf die Platte eine präzise Führung entlang den Datenspuren der Platte erforderlich.

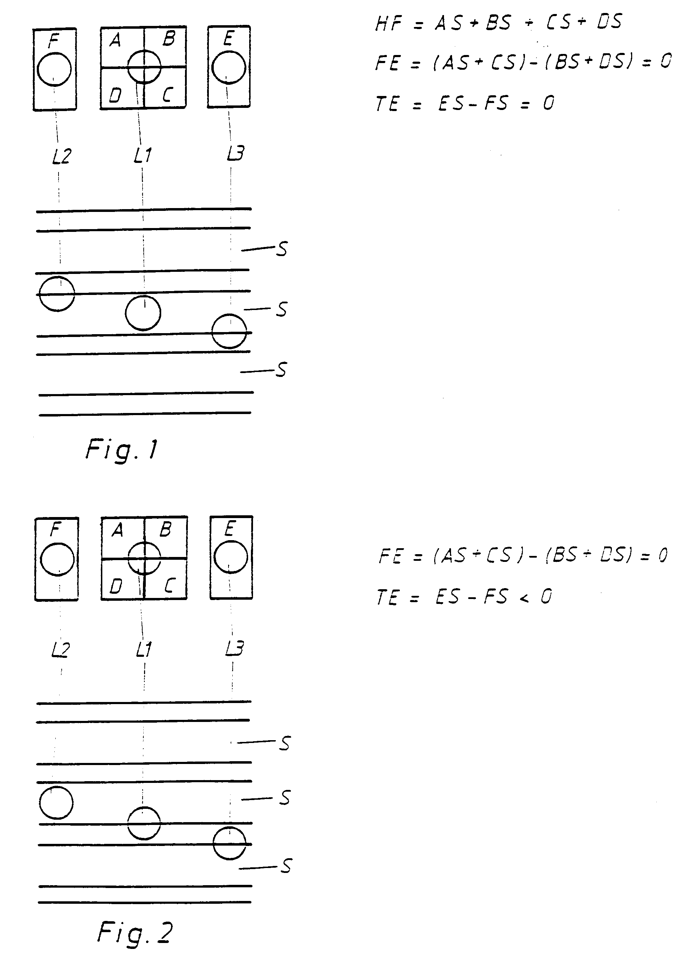

In der Figur 1 ist der Photodetektor PD der optischen Abtastvorrichtung eines CD-Spielers gezeigt, bei der drei Laserstrahlen L1, L2 und L3 auf die CD-Platte fokussiert werden. Die Laserstrahlen L2 und L3 sind die Beugungsstrahlen +1. und -1. Ordnung. Eine derartige Abtastvorrichtung wird in der eingangs genannten Literaturstelle als Three-Beam-Pick-Up bezeichnet, weil sie mit drei Lichtstrahlen arbeitet.

Beim Photodetektor sind vier quadratförmige Photodioden A, B, C und D so zusammengefügt, daß sie wiederum ein Quadrat bilden. Vor dem aus den vier Photodioden A, B, C und D gebildeten Quadrat liegt eine rechteckige Photodiode E; hinter dem Quadrat ist eine weitere Photodiode F vorgesehen. Der mittlere Laserstrahl L1, der auf die vier Photodioden A, B, C und D fokussiert wird, erzeugt das Datensignal HF = AS + BS + CS + DS und das Fokusfehlersignal FE = (AS $\div$ CS) - (BS + DS). Die beiden äußeren Lichtstrahlen L2 und L3, von denen der vordere L3 auf die Photodiode E, der hintere L2 auf die Photodiode F fällt, erzeugen das Spurfehlersignal T = ES - FS. Mit AS, BS, CS, DS, ES und FS sind jeweils die Photospannungen der Dioden A, B, C, D, E und F bezeichnet.

In der Figur 1 folgt der mittlere Laserstrahl L1 genau der Mitte einer Spur S. Das Spurfehlersignal TE hat den Wert null.

$$TE = ES - FS = 0.$$

Wenn der mittlere Lichtstrahl von der Mitte einer Spur S abweicht, bewegt sich der eine Beugungstrahl mehr zur Spurmitte hin, während der andere Beugungsstrahl auf den Zwischenraum zwischen zwei Spuren S strahlt. Weil aber die Reflexionseigenschaften einer Spur und eines Zwischenraumes unterschiedlich sind, wird der eine Beugungsstrahl stärker reflektiert als der andere.

In der Figur 2 ist der Fall dargestellt, daß die Laserstrahlen L1, L2 und L3 nach rechts von der Spur S verschoben sind. Das Spurfehlersignal nimmt einen negativen Wert an:

$$TE = ES - FS < 0.$$

Das Stellglied des Spurregelkreises bewegt die optische Abtastvorrichtung nun soweit nach links, bis das Spurfehlersignal TE null wird.

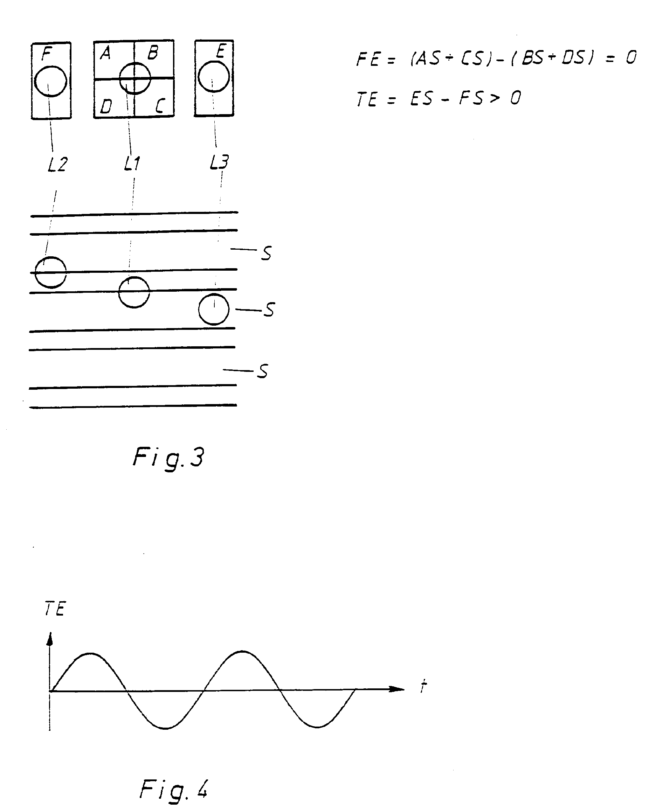

Im entgegengesetzten Fall, wenn die Laserstrahlen nach links von der Spur verschoben sind, ist das Spurfehlersignal positiv: TE = ES - FS > 0. Nun bewegt das Stellglied des Spurregelkreises die optische Abtastvorrichtung so weit nach rechts, bis das Spurfehlersignal TE null wird. Dieser Fall ist in Figur 3 gezeigt.

Wenn der Lichtstrahl L1 und die zugehörenden Beugungsstrahlen L2 und L3 mehrere Datenspuren kreuzen, nimmt das Spurfehlersignal TE den in Figur 4 gezeigten sinusförmigen Verlauf an.

Aus der JP-A-60-10429 ist ein Spurregelkreis bekannt, bei dem an der unteren und oberen Hüllkurve des HF-Signals erkannt wird, ob der Lichtstrahl Datenspuren kreuzt. Wenn der Lichtstrahl über mehrere Datenspuren läuft, bricht das HF-Signal regelmäßig zwischen zwei Spuren zusammen.

Um die Anzahl der vom Lichtstrahl überstrichenen Spuren festzustellen, wird die Hüllkurve des HF-Signals gebildet und in ein impulsförmiges Signal umgewandelt, das dem Zähleingang eines Vorwärts-Rückwärts-Zählers zugeführt wird. Auf diese Weise werden von dem Vorwärts-Rückwärts-Zähler die HF-Einbrüche gezählt.

Um festzustellen, in welcher Richtung der Lichtstrahl bewegt wird, radial nach innen oder außen, ist eine sogenannte Richtungslogik erforderlich, welche die Phasenverschiebung zwischen dem Spurfehlersignal TE und der Einhüllenden des HF-Signals auswertet. Die Phasenverschiebung beträgt in Abhängigkeit von der Bewegungsrichtung des Lichtstrahls entweder + 90° oder - 90°. Diese beiden Werte gelten jedoch nur für relativ geringe Geschwindigkeiten des Lichtstrahls, wie nun erläutert wird.

Aus dem sinusförmigen Spurfehlersignal TE wird mittels eines RC-Gliedes ein rechteckförmiges Spurfehlersignal erzeugt. Die Zeitkonstante ist daher sowohl für die ansteigenden als auch für die fallenden Flanken gleich groß. Weil jedoch ein rechteckförmiges Hüllkurvensignal mittels eines RC-Gliedes und durch anschließende Spitzenwertgleichrichtung aus der Einhüllenden des HF-Signals gewonnem wird, sind die Zeitkonstanten für die steigende und die fallende Flanke unterschiedlich groß. Dieser Unterschied nimmt mit der Geschwindigkeit des Lichtstrahls zu.

Es ist z.B. bekannt, dem D-Eingang eines D-Flip-Flops das Spurfehlersignal TE und seinem Takteingang die Einhüllende des HF-Signals zuzuführen. Das D-Flip-Flop erhält deshalb stets einen Impuls an seinem Takteingang, wenn der Lichtstrahl eine Datenspur kreuzt. Weil das Vorzeichen des Spurfehlersignals TE jedoch von der Richtung abhängt, in welcher der Lichtstrahl eine Datenspur verläßt, wird bei der einen Richtung das D-Flip-Flop gesetzt - sein Ausgang geht auf "HIGH" - , bei der anderen Richtung bleibt dagegen sein Ausgang auf "LOW". Das Signal am Q-Ausgang des D-Flip-Flops kann daher zur Bestimmung der Zählrichtung - vorwärts oder rückwärts - eines Vorwärts-Rückwärts-Zählers dienen. Deshalb zählt der Vorwärts-Rückwärts-Zähler im Fall der einen Richtung vorwärts, während er im Fall der anderen Richtung rückwärts zählt.

Ein Nachteil besteht nun darin, daß bei hohen Suchgeschwindigkeiten, wenn der Lichtstrahl sehr schnell über die Spuren bewegt wird, die Phasenverschiebung zwischen der Einhüllenden des HF-Signals und dem Spurfehlersignal wegen der unterschiedlichen Zeitkonstanten nicht mehr + 90° oder - 90° beträgt; weil die Phasenverschiebung daher in einen nicht mehr definierten Zustand übergeht, kann bei hohen Geschwindigkeiten die Bewegungsrichtung des Lichtstrahls nicht mehr festgestellt werden.

Weil das aus der Hüllkurve des HF-Signals gewonnene Rechtecksignal außerdem mit Prellungen behaftet ist, sind zusätzlich Maßnahmen zum Entprellen zu treffen.

Es ist daher Aufgabe der Erfindung, ein Verfahren zur Feststellung, in welcher Richtung ein Abtaster Markierungen überstreicht oder Datenspuren auf einem Aufzeichnungsträger kreuzt, so zu gestalten, daß angezeigt wird, in welcher Richtung der Abtaster die Markierungen überstreicht oder die Datenspuren eines Aufzeichnungsträgers kreuzt.

Die Erfindung löst diese Aufgabe dadurch, daß die Phasenverschiebung zwischen dem ersten Fehlersignal und dem zweiten Fehlersignal zur Bestimmung der Bewegungsrichtung des Abtasters nur dann ausgewertet wird, wenn die Geschwindigkeit, mit welcher der Abtaster Markierungen überstreicht oder Datenspuren kreuzt, unter einem vorgebbaren Schwellwert liegt, und daß ansonsten jedoch die zuletzt festgestellte Richtung als gültiger Meßwert beibehalten wird.

Bei der Erfindung wird von der Erkenntnis ausgegangen, daß sich die Geschwindikeit des abtastenden Lichtstrahls nicht sprunghaft ändern kann. Wenn der Lichtstrahl über die Spuren bewegt wird, steigt seine Geschwindigkeit nicht sprungartig, sondern stetig von null auf den höchsten Wert an. Daher beträgt zumindest zu Beginn der Bewegung die Phasenverschiebung zwischen dem impulsförmigen Spurfehlersignal TZ und dem impulsförmigen Hüllkurvensignal HP in Abhängigkeit von der Bewegungsrichtung + 90° oder - 90°. Wird die Geschwindigkeit des Lichtstrahls nun so groß, daß nicht mehr die Flanken des impulsförmigen Hüllkurvensignals HP und des impulsförmigen Spurfehlersignals TE abwechselnd aufeinanderfolgen, so behält die Richtungslogik RL die zuletzt festgestellte Richtung bei. Weil der Lichtstrahl aber nicht sprungartig von der einen Bewegungsrichtung in die andere wechseln kann, sondern zunächst bis zum Stillstand abgebremst wird, folgen die Flanken des impulsförmigen Hüllkurvensignals HP und des impulsförmigen Spurfehlersignals wieder abwechselnd aufeinander. Die Phasenverschiebung wird wieder bis zu + 90° oder - 90°, je nachdem, ob der Lichtstrahl radial nach innen oder außen bewegt wird. Die Richtungslogik RL wertet die Phasenverschiebung jetzt wieder aus und kann damit die Bewegungsrichtung des Lichtstrahls feststellen. Wenn der Lichtstrahl nun seine Bewegungsrichtung umkehrt, kehrt sich das Vorzeichen der Phasenverschiebung ebenfalls um. Daran erkennt die Richtungslogik RL die Änderung der Bewegungsrichtung.

Bewegt sich der Lichtstrahl in der einen Richtung, so folgt auf eine steigende bzw. eine fallende Flanke des impulsförmigen Hüllkurvensignals HP stets eine fallende bzw. steigende Flanke des impulsförmigen Spurfehlersignäls TZ. Auf eine Flanke des einen Typs im einen Signal folgt eine Flanke entgegengesetzten Typs im anderen Signal.

Folgt dagegen auf eine Flanke des impulsförmigen Hüllkurvensignals HP stets eine gleiche Flanke des impulsförmigen Spurfehlersignals TZ, so erkennt die Richtungslogik, daß sich der Lichtstrahl in der anderen Richtung bewegt. Auf eine Flanke des einen Typs im einen Signal folgt eine Flanke deselben Typs im anderen Signal.

Wenn die Geschwindigkeit des Lichtstrahls - jetzt in der entgegengestzten Richtung wie zuvor - so groß wird, daß die Flanken nicht mehr abwechselnd aufeinanderfolgen, behält die Richtungslogik die zuletzt ermittelte Richtung bei.

Es zeigen

Figur 5 ein erstes Ausführungsbeispiel der Erfindung

Figur 6 ein zweites Ausführungsbeispiel der Erfindung

Figur 7, 8 und 9 Impulsdiagramme zur Erläuterung der Erfindung.

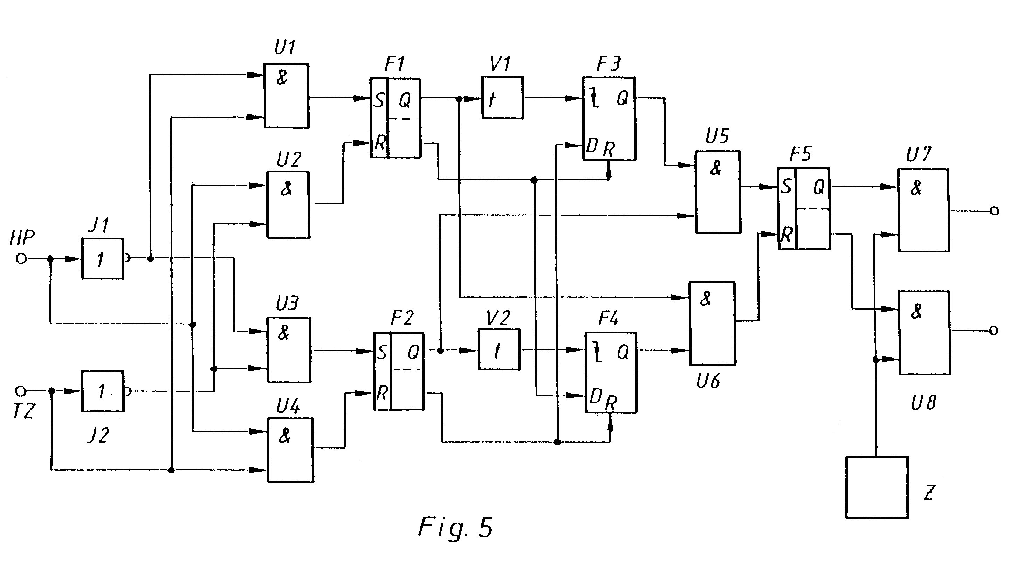

Die Richtungslogik ist in Figur 5 mit RL, die Detektionsschaltung, die durch ein Signal anzeigt, wenn der Lichtstrahl eine Spur kreuzt, mit Z bezeichnet.

Es wird nun das in Figur 5 gezeigte erste Ausführungsbeispiel der Erfindung beschrieben und erläutert.

Der Ausgang eines Inverters I1 ist mit dem ersten Eingang eines UND-Gatters U1 und eines UND-Gatters U3 verbunden. Der Eingang des Inverters I1 ist mit dem ersten Eingang eines UND-Gatters U2 und eines UND-Gatters U4 verbunden. Der Ausgang eines Inverters I2 ist mit dem zweiten Eingang des UND-Gatters U2 und des UND-Gatters U3 verbunden. Der Eingang des Inverters I2 ist mit dem zweiten Eingang des UND-Gatters U1 und des UND-Gatters U4 verbunden. Der Ausgang des UND-Gatters U1 ist mit dem Setzeingang eines RS-Flip-Flops F1 verbunden, dessen Rücksetzeingang mit dem Ausgang des UND-Gatters U2 verbunden ist. Der Ausgang des UND-Gatters U3 ist mit dem Setzeingang eines RS-Flip-Flops F2 verbunden, dessen Rücksetzeingang mit dem Ausgang des UND-Gatters U4 verbunden ist. Der Q-Ausgang des RS-Flip-Flops F1 ist mit dem ersten Eingang eines UND-Gatters U6 und über ein Verzögerungsglied V1 mit dem Takteingang eines D-FLip-Flops F3 verbunden, aessen Q-Ausgang mit dem ersten Eingang eines UND-Gatters U5 verbunden ist. Der $\overline{Q}$-Ausgang des RS-Flip-Flops F1 ist mit dem Rücksetzeingang des D-Flip-Flops F3 und mit dem Dateneingang eines D-Flip-Flops F4 verbunden, dessen Q-Ausgang mit dem zweiten Eingang des UND-Gatters U6 verbunden ist. Der Q-Ausgang des RS-Flip-Flops F2 ist mit dem zweiten Eingang des UND-Gatters U5 und über ein Verzögerungsglied V2 mit dem Takteingang des D-Flip-Flops F4 verbunden, dessen Rücksetzeingang mit dem $\overline{Q}$-Ausgang des RS-Flip-Flops F2 una dem Dateneingang des RS-Flip-Flops F3 verbunden ist. Der Ausgang des UND-Gatters U5 ist mit dem Setzeingang eines RS-Flip-Flops F5 verbunden, dessen Rücksetzeingang mit dem Ausgang des UND-Gatters U6 verbunden ist. Der Q-Ausgang des RS-Flip-Flops F5 ist mit dem ersten Eingang eines UND-Gatters U7, der $\overline{Q}$-Ausgang mit dem ersten Eingang eines UND-Gatters U8 verbunden. Der Ausgang einer Detektionsschaltung Z ist mit dem zweiten Eingang der UND-Gatter U7 und U8 verbunden.

Dem Eingang des Inverters I1 wird das aus der Hüllkurve des HF-Signals HF gewonnene impulsförmige Hüllkurvensignal HP zugeführt, dagegen wird dem Eingang des Inverters I2 das aus dem sinusförmigen Spurfehlersignal TE gebildete impulsförmige Spurfehlersignal TZ zugeführt. Das RS-Flip-Flop F5 gibt an seinem Q-Ausgang eine logische 1 ab, wenn der Lichtstrahl Spuren in der einen Richtung kreuzt; dagegen liegt am Q-Ausgang des RS-Flip-Flops F5 eine logische Null, wenn der Lichtstrahl Spuren in der anderen Richtung überquert. Die Detektorsschaltung Z stellt fest, wenn der Lichtstrahl eine Spur verläßt. Sie gibt an ihrem Ausgang eine logische Eins ab, wenn aer Lichtstrahl nicht auf eine Spur, sondern auf den Raum zwischen zwei Spuren strahlt, für den der Fachausdruck "Rasen" lautet. Ist der Lichtstrahl auf eine Spur gerichtet, so liegt am Ausgang der Detektionsschaltung Z eine logische Null. Die UND-Gatter U7 und U8 sind daher gesperrt, solange der Lichtstrahl auf eine Spur strahlt. Das UND-Gatter U7 gibt einen Zählimpuls ab, wenn der die Daten abtastende Lichtstrahl eine Spur auf dem Aufzeichnunsträger z.B. von rechts nach links kreuzt; dagegen gibt das UND-Gatter U8 einen Zählimpuls ab, wenn der Lichtstrahl in der entgegengesetzten Richtung, also von links nach rechts, eine Datenspur kreuzt.

Die Zählimpulse am Ausgang des UND-Gatters U7 können z.B. einem Vorwärtszähler oder dem Vorwärtszähleingang eines Vorwärts-Rückwärts-Zählers zugeführt werden. Die Zählimpulse am Ausgang des UND-Gatters U8 werden dann von einem Rückwärts-Zähler gezählt oder dem Rückwärtszähleingang des Vorwärts-Rückwärts-Zählers zugeführt.

Wenn die Geschwindigkeit des Lichtstrahls so groß wird, daß die Flanken des impulsförmigen Hüllkurvensignals HP und des impulsförmigen Spurfehlersignals TZ nicht mehr abwechselnd aufeinanderfolgen, behält das RS-Flip-Flop F5 seinen Zustand bei. Es bleibt in Abhängigkeit von der zuletzt festgestellten Bewegungsrichtung des Lichtstrahls gesetzt oder zurückgesetzt. Das RS-Flip-Flop F5 ändert daher seinen Zustand, wenn sich die Folge der Flanken des impulsförmigen Hüllkuvensignals HP und des impulsförmigen Spurfehlersignals TZ ändert. Folgen mehrere Flanken deselben Signals aufeinander, so ändert das RS-Flip-Flop F5 seinen Zustand nicht.

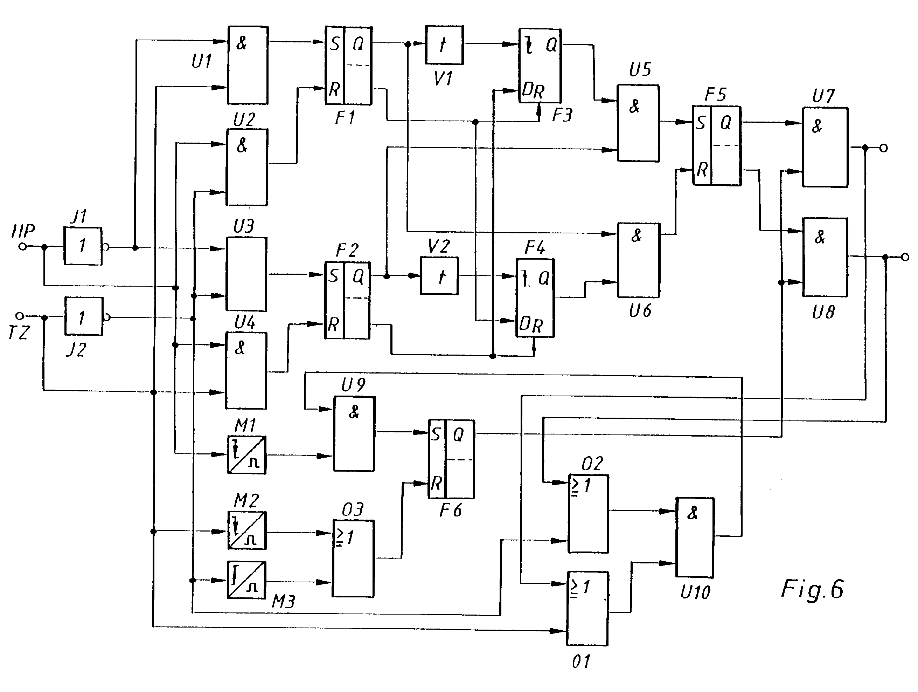

Das in Figur 6 abgebildete zweite Ausführungsbeispiel zeigt den Aufbau der Detektionsschaltung Z und wie sie mit der Richtungslogik RL verbunden ist.

Das impulsförmige Hüllkurvensignal HP wird dem Eingang eines mit fallender Flanke triggerbaren Monoflops M1 zugeführt, dessen Ausgang mit dem ersten Eingang eines UND-Gatters U9 verbunden ist. Das impulsförmige Spurfehlersignal TZ wird einem ebenfalls mit fallender Flanke triggerbaren Monoflop M2 und dem ersten Eingang eines ODER-Gatters 01 zugeführt. Das invertierte impulsförmige Spurfehlersignal $\overline{TZ}$ wird einem mit steigender Flanke triggerbaren Monoflop M3 und dem ersten Eingang eines ODER-Gatters 02 zugeführt. Die Ausgänge der Monoflops M2 und M3 sind mit den Eingängen eines ODER-Gatters 03 verbunden, dessen Ausgang mit dem Rücksetzeingang eines RS-Flip-Flops F6 verbunden ist. Der Ausgang des UND-Gatters U9 ist mit dem Setzeingang des RS-Flip-Flops F6 verbunden. Die Ausgänge der ODER-Gatter 01 und 02 sind mit den Eingängen eines UND-Gatters U10 verbunden, dessen Ausgang mit dem zweiten Eingang des UND-Gatters U9 verbunden ist. Der Ausgang des UND-Gatters U8 der Richtungslogik RL ist mit dem zweiten Eingang des ODER-Gatters 02, der Ausgang des UND-Gatters U7 mit dem zweiten Eingang des ODER-Gatters 01 verbunden. Der Q-Ausgang des RS-Flip-Flops F6, der Ausgang der Detektionsschaltung Z, ist mit dem zweiten Eingang der UND-Gatter U7 und U8 verbunden.

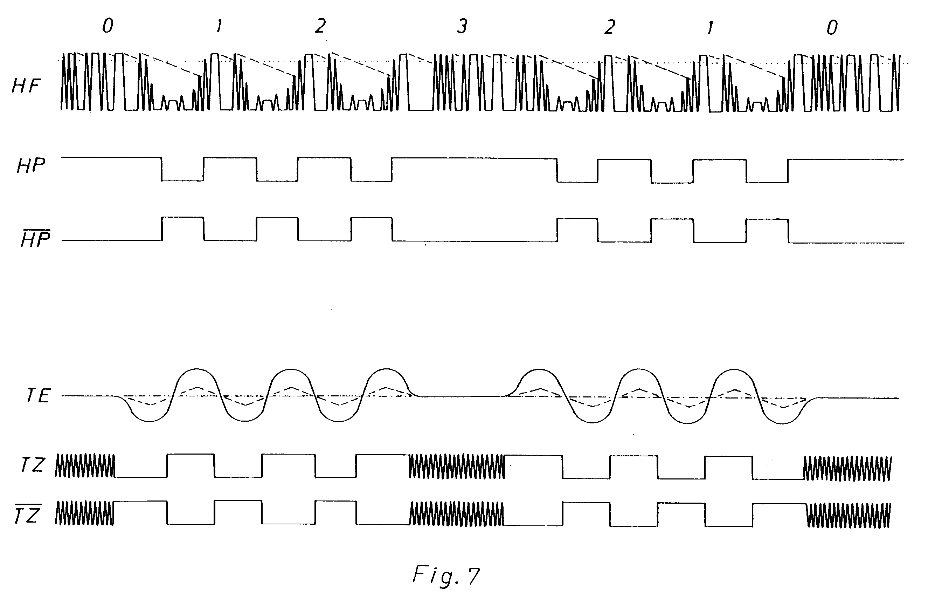

Anhand der in den Figuren 7, 8 und 9 gezeigten Impulsdiagramme wird die Funktion des ersten und zweiten Ausführungsbeispieles nun erläutert.

In der Figur 7 ist im HF-Signal HF angedeutet, daß der Lichtstrahl von der Spur 0 über die Spuren 1 und 2 zur Spur 3 läuft, dort seine Richtung umkehrt, und wieder zurück zur Spur 0 über die Spuren 2 und 1 läuft. Für dieses angenommene Beispiel sind in der Figur 7 die Signale dargestellt.

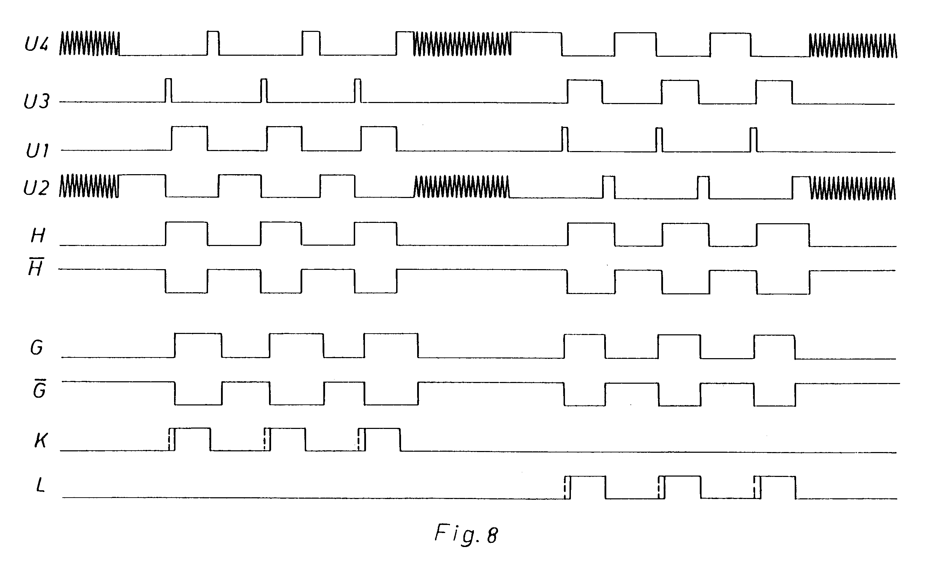

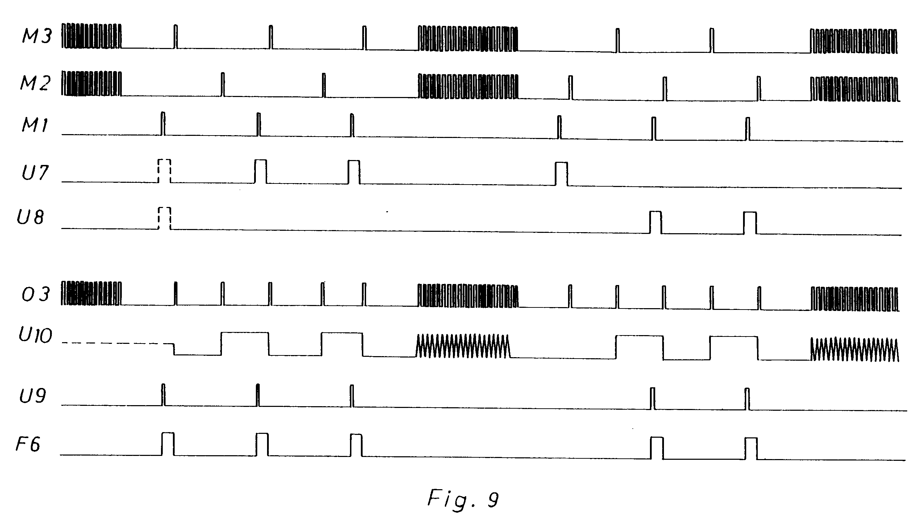

Die Signale HP, $\overline{HP}$, TZ und $\overline{TZ}$ werden in den UND-Gattern U1, U2, U3 und U4 miteinander verknüpft. Die sich durch die Verknüpfung ergebenden Signale an den Ausgängen der UND-Gatter U1, U2, U3 und U4, die noch mit Prellern behaftet sind, sind in den Impulsdiagrammen der Figur 8 mit U1, U2, U3 und U4 bezeichnet. Aus diesen Signalen wird am Q-Ausgang des RS-Flip-Flops F1 das Signal H und am $\overline{Q}$-Ausgang das Signal $\overline{H}$ gebildet. Das Signal am Q-Ausgang des RS-Flip-Flops F2 ist mit G bezeichnet, das an seinem $\overline{Q}$-Ausgang mit $\overline{G}$. Aus den prellfreien Signalen H, $\overline{H}$, G und $\overline{G}$ wird am Q-Ausgang des D-Flip-Flops F3 das Signal K gebildet, am Q-Ausgang des D-Flip-Flops F4 das Signal L. Die Signale an den Ausgängen der Monoflops M1, M2 und M3, die auf die Preller in den Signalen TZ, $\overline{TZ}$ und HP reagieren, sind in der Figur 9 mit den gleichen Buchstaben bezeichnet wie die Monoflops. Die Signale an den UND-Gattern U7, U8, U9 und U10, am ODER-Gatter 03 sowie am RS-Flip-Flop F6 sind im Diagramm der Figur 9 ebenfalls mit den gleichen Buchstaben wie die zugehörenden Bauteile bezeichnet.

Das in Figur 6 gezeigte zweite Ausführungsbeispiel kann z.B. in I²L-Technik ausgeführt sein.

Die Erfindung ist allgemein für Zählvorrichtungen zum Abzählen von Markierungen oder für Regelkreise zum Positionieren einer Einheit, beispielsweise eines Abtasters, geeignet, bei der die Positionierung durch Abtasten von Markierungen erfolgt. Die Art der Abtastung, mechanisch oder berührungslos, spielt keine Rolle. Die Erfindung ist insbesondere für Spurregelkreise geeignet, wie sie z.B. in CD-Spielern, Videoplattenspielern, DRAW-Disc-Spielern oder magneto-optischen Geräten anzutreffen sind.

**Patentansprüche**

1. Verfahren zur Feststellung, in welcher Richtung ein Abtaster Markierungen überstreicht oder Datenspuren auf einem Aufzeichnungsträger kreuzt, wobei ein erstes Fehlersignal (HP) und ein zum ersten Fehlersignal zweites Fehlersignal (TE) erzeugt wird, dessen Phase gegenüber der des ersten Fehlersignals (HP) in Abhängigkeit von der Bewegungsrichtung des Abtasters verschoben ist, **dadurch gekennzeichnet**, daß die Phasenverschiebung zwischen dem ersten Fehlersignal (HP) und dem zweiten Fehlersignal (TE) zur Bestimmung der Bewegungsrichtung des Abtasters nur dann ausgewertet wird, wenn die Geschwindigkeit, mit welcher der Abtaster Markierungen überstreicht oder Datenspuren kreuzt, unter einem vorgebbaren Schwellwert liegt, und daß ansonsten jedoch die zuletzt festgestellte Richtung als gültiger Meßwert beibehalten wird.

2. Verfahren nach Anspruch 1 für einen Spurregelkreis, **dadurch gekennzeichnet,** daß aus einem sinusförmigen Spurfehlersignal (TE) ein impulsförmiges Spurfehlersignal (TZ) erzeugt wird, daß aus der Hüllkurve des HF-Signals (HF), das ein Lichtstrahl beim Lesen der Daten vom Aufzeichnungsträger erzeugt, ein impulsförmiges Hüllkurvensignal (HP) gebildet wird, daß die Phasenverschiebung zwischen dem Spurfehlersignal (TE) und dem impulsförmigen Hüllkurvensignal (HP) des HF-Signals (HF) zur Bestimmung der Bewegungsrichtung des Lichtstrahls nur dann ausgewertet wird, wenn die Geschwindigkeit, mit welcher der Lichtstrahl Datenspuren kreuzt, unter dem vorgebbaren Schwellwert liegt.

3. Verfahren nach Anspruch 2, **dadurch gekennzeichnet**, daß das impulsförmige Spurfehlersignal (TZ), das Impulsförmige Hüllkurvensignal (HP) sowie deren inverse Signale ($\overline{TZ}$, $\overline{HP}$) einer Richtungslogik zugeführt werden, daß die Richtungslogik ein erstes Signal abgibt, das anzeigt, daß der Lichtstrahl in der einen Richtung Datenspuren kreuzt, wenn auf eine Flanke des impulsförmigen Hüllkurvensignals (HP) stets eine entgegengesetzt gerichtete Flanke der impulsförmigen Spurfehlersignals (TZ) folgt, daß die Richtungslogik dagegen ein zweites Signal abgibt, das anzeigt, daß der Lichtstrahl in der anderen Richtung Datenspuren kreuzt, wenn auf eine Flanke des impulsförmigen Spurfehlersignals (TZ) stets eine gleiche Flanke des impulsförmigen Hüllkurvensignals (HP) folgt, und daß die Richtungslogik das zuletzt abgegebene Signal beibehält, wenn die Flanken des impulsförmigen Hüllkurvensignals (HP) und des impulsförmigen Spurfehlersignals (TZ) nicht mehr abwechselnd aufeinanderfolgen.

4. Verfahren nach Anspruch 2 oder 3, **dadurch gekennzeichnet**, daß das impulsförmige Spurfehlersignal (TZ), das impulsförmige Hüllkurvensignal (HP) sowie deren inverse Signale ($\overline{TZ}$, $\overline{TP}$) einer Detektionsschaltung (Z) zugeführt werden, die jedesmal einen Zählimpuls abgibt, wenn der die auf dem Aufzeichnungsträger gespeicherten Daten abtastende Lichtstrahl eine Datenspur kreuzt.

5. Richtungslogik zur Durchführung des Verfahrens nach Anspruch 1, 2, 3 oder 4, **dadurch gekennzeichnet,** daß der Ausgang eines ersten Inverters (I1) mit dem ersten Eingang eines ersten UND-Gatters (U1) und eines dritten UND-Gatters (U3) verbunden ist, daß der Eingang des ersten Inverters (I1), dem das impulsförmige Hüllkurvensignal (HP) zugeführt wird, mit dem ersten Eingang eines zweiten UND-Gatters (U2) und eines vierten UND-Gatters (U4) verbunden ist, daß der Ausgang eines zweiten Inverters (I2) mit dem zweiten Eingang des zweiten UND-Gatters (U2) und des dritten UND-Gatters (U3) verbunden ist, daß der Eingang des zweiten Inverters (I2), dem das impulsförmige Spurfehlersignal (TZ) zugeführt wird, mit dem zweiten Eingang des ersten UND-Gatters (U1) und des vierten UND-Gatters (U4) verbunden ist, daß der Ausgang des ersten UND-Gatters (U1) mit dem Setzeingang eines ersten RS-Flip-Flops (F1) verbunden ist, dessen Rücksetzeingang mit dem Ausgang des zweiten UND-Gatters (U2) verbunden ist, daß der Ausgang des dritten UND-Gatters (U3) mit dem Setzeingang eines zweiten RS-Flip-Flops (F2) verbunden ist, dessen Rücksetzeingang mit dem Ausgang des vierten UND-Gatters (U4) verbunden ist, daß der Q-Ausgang des ersten RS-Flip-Flops (F1) mit dem ersten Eingang eines fünften UND-Gatters (U6) und über ein erstes Verzögerungsglied (V1) mit dem Takteingang eines ersten D-Flip-Flops (F3) verbunden ist, dessen Q-Ausgang mit dem ersten Eingang eines sechsten UND-Gatters (U5) verbunden ist, daß der $\overline{Q}$-Ausgang des ersten RS-Flip-Flops (F1) mit dem Rücksetzeingang des ersten D-Flip-Flops (F3) und mit dem Dateneingang des zweiten D-Flip-Flops (F4) verbunden ist, dessen Q-Ausgang mit dem zweiten Eingang des fünften UND-Gatters (U6) verbunden ist, daß der Q-Ausgang des zweiten RS-Flip-Flops (F2) mit dem zweiten Eingang des sechsten UND-Gatters (U5) und über ein zweites Verzögerungsglied (V2) mit dem Takteingang des zweiten D-Flip-Flops (F4) verbunden ist, dessen Rücksetzeingang mit dem $\overline{Q}$-Ausgang des zweiten RS-Flip-Flops (F2) und mit dem Dateineingang des ersten D-Flip-Flops (F3) verbunden ist, daß der Ausgang des sechsten UND-Gatters (U5) mit dem Setzeingang des dritten RS-Flip-Flops (F5) verbunden ist, dessen Rücksetzeingang mit dem Ausgang des fünften UND-Gatters (U6) verbunden ist, daß der erste Eingang eines siebten UND-Gatters (U7) mit dem Q-Ausgang des dritten RS-Flip-Flops (F5) verbunden ist, daß der $\overline{Q}$-Ausgang des dritten RS-Flip-Flops (F5) mit dem ersten Eingang eines achten UND-Gatters (U8) verbunden ist, daß der zweite Eingang des siebten und achten UND-Gattes (U7, U8) mit der Detektionsschaltung (Z) verbunden ist, die eine logische Eins abgibt, wenn der Lichtstrahl eine Spur verläßt, so daß das siebte UND-Gatter (U7) einen Zählimpuls abgibt, wenn der Lichtstrahl in der einen Richtung eine Datenspur kreuzt und daß das achte UND-Gatter (U8) einen Zählimpuls abgibt, wenn der Lichtstrahl eine Datenspur in der entgegengesetzten Richtung kreuzt.

6. Detektionsschaltung für eine Richtungslogik nach Anspruch 5, **dadurch gekennzeichnet**, daß dem Eingang eines mit fallender Flanke triggerbaren ersten Monoflops (M1) das impulsförmige Hüllkurvensignal (HP) zugeführt wird, daß das impulsförmige Spurfehlersignal (TZ) einem mit fallender Flanke triggerbaren zweiten Monoflop (M2) und dem ersten Eingang eines ersten ODER-Gatters (O1) zugeführt wird, daß das invertierte impulsförmige Spurfehlersignal ($\overline{TZ}$) einem mit steigender Flanke triggerbaren dritten Monoflop (M3) und dem ersten Eingang eines zweiten ODER-Gatters (O2) zugeführt wird, daß der Ausgang der ersten Monoflops (M1) mit dem ersten Eingang eines neunten UND-Gatters (U9) verbunden ist, dessen zweiter Eingang mit dem Ausgang eines zehnten UND-Gatters (U10) verbunden ist, daß der Ausgang des zweiten und dritten Monoflops (M2, M3) mit je einem Eingang eines dritten ODER-Gatters (O3) verbunden ist, daß der Ausgang des ersten und zweiten ODER-Gatters (O1, O2) mit je einem Eingang des zehnten UND-Gatters (U10) verbunden ist, daß der Ausgang des neunten UND-Gatters (U9) mit dem Setzeingang und der Ausgang des dritten ODER-Gatters (O3) mit dem Rücksetzeingang eines vierten RS-Flip-Flops (F6) verbunden ist, dessen Q-Ausgang mit dem zweiten Eingang des siebten und achten UND-Gatters (U7, U8) der Richtungslogik verbunden ist, daß der Ausgang des achten UND-Gatters (U8) mit dem zweiten Eingang des zweiten ODER-Gatters (O2) und daß der Ausgang des siebten UND-Gatters (U7) mit dem zweiten Eingang des ersten ODER-Gatters (O1) verbunden ist.

## Claims

1. A method for determining in which direction a scanner travels across markings or crosses data tracks on a recording medium, in which there are generated a first error signal (HP) and a second error signal (TE) shifted in phase relative to the first error signal (HP) depending upon the direction of motion of the scanner characterised in that the phase shift between the first error signal (HP) and the second error signal (TE) is evaluated for the determination of the direction of motion of the scanner only when the speed at which the scanner travels across markings or crosses data tracks is below a predeterminable threshold value, and in that otherwise the direction last determined is maintained as a valid measured value.

2. A method according to claim 1 for a tracking control circuit, characterised in that a pulse shaped tracking error signal (TZ) is generated from a sinusoidal tracking error signal (TE), in that a pulse shaped envelope signal (HP) is generated from the envelope of the HF signal (HF), which a light beam generates on reading the data from the recording medium, in that the phase shift between the tracking error signal (TE) and the pulse shaped envelope signal (HP) of the HF signal (HF) is evaluated for the determination of the direction of motion of the light beam only when the speed at which the light beam crosses data tracks is below the predeterminable threshold value.

3. A method according to claim 2, characterised in that the pulse shaped tracking error signal (TZ), the pulse shaped envelope signal (HP) as well as their inverse signals ($\overline{TZ}, \overline{HP}$) are fed to a direction determining logic circuit, in that the direction determining logic circuit emits a first signal, which indicates that the light beam is crossing data tracks in one direction, when an edge of the pulse shaped envelope signal (HP) is always followed by an edge of opposite direction of the pulse shaped tracking error signal (TZ) in that, conversely, the direction determining logic circuit emits a second signal, which indicates that the light beam is crossing data tracks in the other direction, when an edge of the pulse shaped tracking error signal (TZ) is always followed by a like edge of the pulse shaped envelope signal (HP) and in that the direction determining logic circuit maintains the last emitted signal when the edges of the pulse shaped envelope signal (HP) and of the pulse shaped tracking error signal (TZ) no longer occur in an alternating sequence.

4. A method according to claim 2 or 3, characterised in that the pulse shaped tracking error signal (TZ), the pulse shaped envelope signal (HP) as well as their inverse signals ($\overline{TZ}, \overline{HP}$) are fed to a detection circuit (Z) which outputs a counting pulse each time the light beam scanning the data stored on the recording medium crosses a data track.

5. A direction determining logic circuit for executing the method according to claim 1,2,3 or 4, characterised in that the output of the first inverter (I1) is connected to the first input of a first AND gate (U1) and of a third AND gate (U3), that the input of the first inverter (I1) to which is supplied the pulse shaped envelope signal (HP), is connected to the first input of a second AND gate (U2) and of a fourth AND gate (U4), in that the output of a second inverter (I2) is connected to the second input of the second AND gate (U2) and of the third AND gate (U3), in that the input of the second inverter (I2), to which is supplied the pulse shaped tracking error signal (TZ), is connected to the second input of the first AND gate (U1) and of the fourth AND gate (U4), in that the output of the first AND gate (U1) is connected to the set input of a first RS flipflop (F1), the reset input of which is connected to the output of the second AND gate (U2), in that the output of the third AND gate (U3) is connected to the set input of a second RS flipflop (F2), the reset input of which is connected to the output of the fourth AND gate (U4), in that the Q-output of the first RS flipflop (F1) is connected to the first input of a fifth AND gate (U6) and, via a first delay element (V1), to the clock input of a first D flipflop (F3), the Q-output of which is connected to the first input of a sixth AND gate (U5), in that the $\overline{Q}$-output of the first RS flipflop (F1) is connected to the reset input of the first D flipflop (F3) and to the data input of the second D flipflop (F4), the Q-output of which is connected to the second input of the fifth AND gate (U6), in that the Q-output of the second RS flipflop (F2) is connected to the second input of the sixth AND gate (U5) and, via a second delay element (V2), to the clock input of the second D flipflop (F4), the reset input of which is connected to the Q̄-output of the second RS flipflop (F2) and to the data input of the first D flipflop (F3), in that the output of the sixth AND gate (U5) is connected to the set input of the third RS flipflop (F5), the reset input of which is connected to the output of the fifth AND gate (U6), in that the first input of a seventh AND gate (U7) is connected to the Q-output of the third RS flipflop (F5), in that the Q̄-output of the third RS flipflop (F5) is connected to the first input of an eighth AND gate (U8), in that the second input of the seventh and eighth AND gate (U7,U8) is connected to the detection circuit (Z), which emits a logical one when the light beam leaves a track, so that the seventh AND gate (U7) emits a counting pulse when the light beam crosses a data track in one direction, and in that the eighth AND gate (U8) emits a counting pulse when the light beam crosses a data track in the opposite direction.

6. A detection circuit for a direction determining logic circuit according to claim 5, characterised in that the pulse shaped envelope signal (HP) is fed to the input of a first monoflop (M1) triggerable by a descending edge, in that the pulse shaped tracking error signal (TZ) is fed to a second monoflop (M2) triggerable by a descending edge and to the first input of a first OR gate (O1), in that the inverted pulse shaped tracking error signal (T̄Z̄) is fed to a third monoflop (M3) triggerable by a rising edge and to the first input of a second OR gate (O2), in that the output of the first monoflop (M1) is connected to the first input of a ninth AND gate (U9) the second input of which is connected to the output of a tenth AND gate (U10), in that the output of the second and third monoflop (M2,M3) is respectively connected to an input of a third OR gate (O3), in that the output of the first and second OR gate (O1,O2) is respectively connected to an input of the tenth AND gate (U10), in that the output of the ninth AND gate (U9) is connected to the set input and the output of the third OR gate (O3) to the reset input of a fourth RS flipflop (F6), the Q-output of which is connected to the second input of the seventh and eighth AND gate (U7,U8) of the direction determining logic circuit, in that the output of the eighth AND gate (U8) is connected to the second input of the second OR gate (O2), and in that the output of the seventh AND gate (U7) is connected to the second input of the first OR gate (O1).

**Revendications**

1. Procédé pour constater dans quelle direction un dispositif de balayage balaye des repères ou croise des pistes de données sur un support d'enregistrement, un premier signal d'erreur (HP) et un second signal d'erreur (TE) par rapport au premier signal d'erreur étant produits, second signal dont la phase est décalée par rapport à celle du premier signal d'erreur (HP) en fonction de la direction de déplacement du dispositif de balayage, **caractérisé en ce** que le décalage de phase entre le premier signal d'erreur (HP) et le second signal d'erreur (TE) n'est évalué pour déterminer la direction de déplacement du dispositif de balayage que lorsque la vitesse, avec laquelle le dispositif de balayage balaye des repères ou croise des pistes de données, se situe au-dessous d'un seuil qui peut être prédéterminé et qu'en outre la direction qui a été constatée en dernier est conservée comme valeur de mesure valable.

2. Procédé selon la revendication 1 pour un circuit de réglage de piste, **caractérisé en ce** qu'un signal d'erreur de piste en forme d'impulsion (TZ) est produit à partir d'un signal d'erreur de piste sinusoïdal (TE), qu'un signal d'enveloppante en forme d'impulsion (HP) est formé à partir de l'enveloppante du signal HF (HF) qui produit un faisceau lumineux lors de la lecture des données du support d'enregistrement, que le décalage de phase entre le signal d'erreur de piste (TE) et le signal d'enveloppante en forme d'impulsion (HP) du signal HF (HF) n'est évalué pour déterminer la direction de déplacement du faisceau lumineux que lorsque la vitesse, avec laquelle le faisceau lumineux croise des pistes de données, se situe au-dessous du seuil qui peut être prédéterminé.

3. Procédé selon la revendication 2, **caractérisé en ce** que le signal d'erreur de piste en forme d'impulsion (TZ), le signal d'enveloppante en forme d'impulsion (HP) ainsi que leurs signaux inverses (T̄Z̄, H̄P̄) sont amenés à une logique de direction, que la logique de direction donne un premier signal qui indique que le faisceau lumineux dans l'une des directions croise des pistes de données lorsque toujours un flanc dirigé en sens opposé du signal d'erreur de piste en forme d'impulsion (TZ) suit un flanc du signal d'enveloppante en forme d'impulsion (HP), que la logique de direction par contre donne un second signal qui indique que le faisceau lumineux dans l'autre direction croise des pistes de données lorsque toujours un même flanc du signal d'enveloppante en forme d'impulsion (HP) suit un flanc du signal d'erreur de piste en forme d'impulsion (TZ) et que la logique de direction garde le signal qui a été donné en dernier lorsque les flancs du signal d'enveloppante en forme d'impulsion (HP) et du signal d'erreur de piste en forme d'impulsion (TZ) ne se succèdent plus en alternance.

4. Procédé selon la revendication 2 ou 3, **caractérisé en ce** que le signal d'erreur de piste en forme d'impulsion (TZ), le signal d'enveloppante en forme d'impulsion (HP) ainsi que leurs signaux inverses ($\overline{TZ}$, $\overline{HP}$) sont amenés à un circuit de détection (Z) qui donne une impulsion de comptage chaque fois que le faisceau lumineux qui balaye des données mémorisées sur le support d'enregistrement croise une piste de données.

5. Logique de détermination de la direction pour exécuter le procédé selon la revendication 1, 2, 3 ou 4, **caractérisé en ce** que la sortie d'un premier inverseur (¡1) est reliée à la première entrée d'une première porte ET (U1) et d'une troisième porte ET (U3), que l'entrée du premier inverseur (¡1), à laquelle le signal d'enveloppante en forme d'impulsion (HP) est amené, est reliée à la première entrée d'une seconde porte ET (U2) et d'une quatrième porte ET (U4), que la sortie d'un second inverseur (¡2) est reliée à la seconde entrée de la seconde porte ET (U2) et de la troisième porte ET (U3), que l'entrée du second inverseur (¡2), à laquelle le signal d'erreur de piste en forme d'impulsion (TZ) est amené, est reliée à la seconde entrée de la première porte ET (U1) et de la quatrième porte ET (U4), que la sortie de la première porte ET (U1) est reliée à l'entrée de commande d'une première bascule RS (F1) dont l'entrée de remise à l'état initial est reliée à la sortie de la seconde porte ET (U2), que la sortie de la troisième porte ET (U3) est reliée à l'entrée de commande d'une seconde bascule RS (F2) dont l'entrée de remise à l'état initial est reliée à la sortie de la quatrième porte ET (U4), que la sortie Q de la première bascule RS (F1) est reliée à la première entrée d'une cinquième porte ET (U6) et par un premier élément de retard (V1) à l'entrée de cycle d'une première bascule D (F3) dont la sortie Q est reliée à la première entrée d'une sixième porte ET (U5), que la sortie $\overline{Q}$ de la première bascule RS (F1) est reliée à l'entrée de remise à l'état initial de la première bascule RS (F1) est reliée à l'entrée de remise à l'état initial de la première bascule D (F3) et à l'entrée de données de la seconde bascule D (F4) dont la sortie Q est reliée à la seconde entrée de la cinquième porte ET (U6), que la sortie Q de la seconde bascule RS (F2) est reliée à la seconde entrée de la sixième porte ET (U5) et par un second élément de retard (V2) à l'entrée de cycle de la seconde bascule D (F4) dont l'entrée de remise à l'état initial est reliée à la sortie $\overline{Q}$ de la seconde bascule RS (F2) et à l'entrée de données de la première bascule D (F3), que la sortie de la sixième porte ET (U5) est reliée à l'entrée de commande de la troisième bascule RS (F5) dont l'entrée de remise à l'état initial est reliée à la sortie de la cinquième porte ET (U6), que la première entrée d'une septième porte ET (U7) est reliée à l'entrée Q de la troisième bascule RS (F5), que la sortie $\overline{Q}$ de la troisième bascule RS (F5) est reliée à la première entrée d'une huitième porte ET (U8), que la seconde entrée de la septième et de la huitième porte ET (U7, U8) est reliée au circuit de détection (Z) qui donne un un logique lorsque le faisceau lumineux quitte une piste si bien que la septième porte ET (U7) donne une impulsion de comptage lorsque le faisceau lumineux dans l'une des directions croise une piste de données et que la huitième porte ET (U8) donne une impulsion de comptage lorsque le faisceau lumineux croise une piste de données dans la direction opposée.

6. Circuit de détection pour une logique de direction selon la revendication 5, **caractérisé en ce** que le signal d'enveloppante en forme d'impulsion (HP) est amené à l'entrée d'une première bascule monostable (M1) qui peut être déclenchée avec un flanc décroissant, que le signal d'erreur de piste en forme d'impulsion (TZ) est amené à une seconde bascule monostable (M2) qui peut être déclenchée avec un flanc décroissant et à la première entrée d'une première porte OU (01), que le signal d'erreur de piste en forme d'impulsion inversée ($\overline{TZ}$) est amené à une troisième bascule monostable (M3) qui peut être déclenchée avec un flanc croissant et à la première entrée d'une seconde porte OU (02), que la sortie de la première bascule monostable (M1) est reliée à la première entrée d'une neuvième porte ET (U9) dont la seconde entrée est reliée à la sortie d'une dixième porte ET (U10), que la sortie de la deuxième et de la troisième bascule monostable (M2, M3) est reliée à respectivement une entrée d'une troisième porte OU (03), que la sortie de la première et de la seconde porte OU (01, 02) est reliée à respectivement une entrée de la dixième porte ET (U10), que la sortie de la neuvième porte ET (U9) est reliée à l'entrée de commande et que la sortie de la troisième porte OU (03) est reliée à l'entrée de remise à l'état initial d'une quatrième bascule RS (F6) dont la sortie Q est reliée à la seconde entrée de la septième et de la huitième porte ET (U7, U8) de la logique de direction, que la sortie de la huitième porte ET (U8) est reliée à la seconde entrée de la seconde porte OU (02) et que la sortie de la septième porte ET (U7) est reliée à la seconde entrée de la première porte OU (01).

Fig. 1

$$HF = AS + BS + CS + DS$$
$$FE = (AS + CS) - (BS + DS) = 0$$
$$TE = ES - FS = 0$$

Fig. 2

$$FE = (AS + CS) - (BS + DS) = 0$$
$$TE = ES - FS < 0$$

$$FE = (AS + CS) - (BS + DS) = 0$$

$$TE = ES - FS > 0$$

Fig.3

Fig. 4

Fig. 5

Fig.6

Fig. 7

EP 0 494 889 B1

Fig. 8

EP 0 494 889 B1

EP 0 494 889 B1

Fig. 9